# EUROPEAN PATENT APPLICATION

(11) **EP 3 263 191 A1**
(43) Date of publication of application: **03.01.2018**
(21) Application number: 16177399.9
(22) Date of filing: 30.06.2016
(51) Int. Cl.: A63B 43/00, H02J 7/00, A63B 41/12

(54) **BALL CHARGE AND ALIGNMENT**

(71) Applicant: OpenController B.V., 5258 EX Berlicum (NL)
(72) Inventor: Krikke, Edwin, 9990 Weiswampach (LU)

(57) **Abstract**

Technical Problem

The present invention has been made in view of general technical problems as described above and it is an object of the present invention to provide a device and method of electrically charging a device inside a ball using two airvalve instead of one airvalve which is common on a ball.

It is another object of the present invention to provide a device to keep the device centered with a liner structure which pushed outwards relative to the center without deforming the balls natural round sphere.

It will be appreciated by persons skilled in the art that the objects that could be achieved with the present invention are not limited to what has been particularly described hereinabove and the above and other objects that the present invention could achieve will be more clearly understood from the following detailed description.

Technical Solution

In order to solve the above technical problems,
a device of charging a electronics device inside a ball using two airvalves
a device to align an electronics device inside a ball
is presented

Advantageous Effects of Invention

The presented invention solves the problem of charging the ball with a robust device which can handle high impact during its use a for example a sports game where the ball get indented frequently. Wireless charge plates close to the surface do not survive high impact loading as are common in sports balls. The inner liner pushing outwards is a novelty to avoid the misalignment problems using tensioned spider web alike structures. The alignment in the center of the ball needs to be maintained in order to have the electronics which could be tracked using radio signals for example to stay in the center during high impact of the ball

## Description

### TECHNICAL FIELD

The present invention relates to a wired charge contact apparatus and wired charge method for electronics inside a ball and a device to align the electronics inside a ball

### BACKGROUND

Hereinafter, a wired charge contact apparatus and wired charge method for electronics inside a ball and a device to align the electronics inside a ball in the present invention will be briefly described.

During inflating of the ball or sports ball with a conductive airtube, contact on two sides of the ball enables an electric circuit. This electric circuit enable an electric current to flow to electronics inside the ball to charge or recharge an electric energy storage device and or battery. Normally a ball has only one airvalve. Many applications on electrically charging a device inside a ball apply wireless charge which can be damaged during use of the ball. Using two airvalves solves this problem and allow for a robust charging solution.

In order to keep the electronics aligned in the center of the ball a spatial structure is required. The 3D structure has a unique outward bound force due to the rounding and curvature of its beam going from the center outward. The creation of this outward force is required when the ball is impacted from outside which keeps the center of the structure in place while not deforming the sphere of the ball under no load or normal condition.

### DESCRIPTION OF DRAWINGS

The accompanying drawings provide embodiments of the invention together with the description to help the understanding of the present invention.

However, technical features of the present invention are not limited to the accompanying drawings and features disclosed in the respective drawings may be combined to constitute new embodiments.

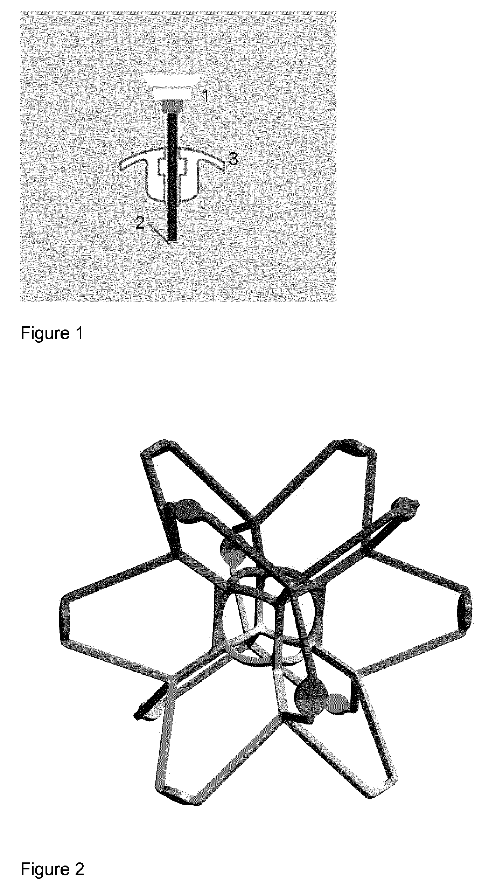

FIG. 1 is a view of the air valve and conductive charge clip of a ball or sports ball when a conductive airtube, contact on two sides of the ball enables an electric circuit. This electric circuit enable an electric current to flow to electronics inside the ball to charge or recharge a electric energy storage device. Item 1 is the conductive airvalve and or airinlet tubeltem 2 is the conductive clip which enable the electric current to flow to the electronics inside the ball. Item 3 is the material comprising the sphere of the ball.
FIG. 2
   In order to keep the electronics aligned in the center of the ball a spatial structure is required. The 3D structure has a unique outward bound force due to the rounding and curvature of its beam going from the center outward. The creation of this outward force is required when the ball is impacted from outside which keeps the center of the structure in place while not deforming the sphere of the ball under no load or normal condition..

### DESCRIPTION OF EMBODIMENTS

### INDUSTRIAL and NON- INDUSTRIAL APPLICABILITY

The embodiments of the present invention may be applied to various wireless tracking and positioning systems in sports tracking the sports ball

## Claims

1. A device and method of electrically charging a device inside a ball.
comprising:
- electrical contact via two air valves to enable a electric circuit for charging
- device to keep the device centered with a liner structure which pushed outwards relative to the center without deforming the balls natural round sphere
